# FASCICULE DE BREVET EUROPEEN

(11) **EP 2 255 537 B1**
(45) Date de publication et mention de la délivrance du brevet: **19.06.2019**
(21) Numéro de dépôt: 09718788.4
(22) Date de dépôt: 20.02.2009
(51) Int. Cl.: H04N 19/503, H04N 19/139, H04N 19/176, H04N 19/70, H04N 19/147, H04N 19/46, H04N 19/196, H04N 19/61, H04N 19/37, H04N 19/103, H04N 19/463, H04N 19/126, H04N 19/14, H04N 19/182, H04N 19/177, H04N 19/17, H04N 19/20, H04N 19/527

(54) **CODAGE ET DECODAGE D'UNE IMAGE OU D'UNE SEQUENCE D'IMAGES DECOUPEES EN BLOCS DE PIXELS**
KODIERUNG UND DEKODIERUNG EINES IN BLÖCKE VON PIXELN ZERLEGTEN BILDS ODER EINER FOLGE VON BILDERN
ENCODING AND DECODING OF AN IMAGE OR IMAGE SEQUENCE DIVIDED INTO PIXEL BLOCKS

(30) Priorité: 21.02.2008 FR 0851131
(43) Date de publication de la demande: 01.12.2010
(73) Titulaire: Orange, 75015 Paris (FR)
(72) Inventeur: AMONOU, Isabelle, F-35510 Cesson-Sevigne (FR); PATEUX, Stéphane, F-35700 Rennes (FR); CAMMAS, Nathalie, F-35490 Sens De Bretagne (FR); KERVADEC, Sylvain, F-35490 Sens De Bretagne (FR)
(86) Numéro de dépôt international: PCT/FR2009/050278
(87) Numéro de publication internationale: WO 2009/112742

(56) Documents cités:
- WO-A-2004/013810
- US-A1- 2002 146 166
- US-A1- 2004 013 196
- US-B1- 6 304 602
- US-B1- 6 310 920
- US-B1- 7 095 786
- THOMAS MEIER ET AL: "Video Segmentation for Content-Based Coding" IEEE TRANSACTIONS ON CIRCUITS AND SYSTEMS FOR VIDEO TECHNOLOGY, IEEE SERVICE CENTER, PISCATAWAY, NJ, US, vol. 9, no. 8, 1 décembre 1999 (1999-12-01), XP011014639 ISSN: 1051-8215
- LABIT C ET AL: "COMPACT MOTION REPRESENTATION BASED ON GLOBAL FEATURES FOR SEMANTICIMAGE SEQUENCE CODING" VISUAL COMMUNICATION AND IMAGE PROCESSING 1991: VISUALCOMMUNICATION, 11-13 NOV. 1991, BOSTON, BELLINGHAM, WA, US, vol. 1605, 1 janvier 1991 (1991-01-01), pages 697-708, XP000372267

## Description

La présente invention se rapporte de manière générale au domaine du traitement d'images, et plus précisément au codage et au décodage d'images numériques et de séquences d'images numériques.

Les images et séquences d'images numériques sont connues pour occuper beaucoup d'espace mémoire, ce qui nécessite, lorsqu'on transmet ces images, de les compresser afin d'éviter les problèmes d'encombrements sur le réseau de communication utilisé pour cette transmission, le débit utilisable sur celui-ci étant généralement limité.

Les techniques actuelles de codage compressif, notamment la norme H.264/MPEG-4 AVC (d'après l'anglais "Advanced Video Coding", développée par le groupe de travail "Joint Video Team" (JVT) issu de la collaboration du groupe "Video Coding Expert Group" (VCEG) de l'Union Internationale des Télécommunications et du groupe Moving Picture Experts Group (MPEG) de l'ISO/IEC, et présentée dans le document ISO/IEC 14496-10), utilisent des techniques de prédiction spatiale ou temporelle de groupes de blocs de pixels, appelés macroblocs, d'une image courante par rapport à d'autres macroblocs appartenant à la même image ou à une image précédente ou suivante. Après ce codage prédictif, les blocs de pixels sont transformés, par une transformation de type transformée en cosinus discrète, puis quantifiés. Les coefficients des blocs de pixels quantifiés sont ensuite parcourus dans un ordre de lecture permettant d'exploiter le nombre important de coefficients nuls dans les hautes fréquences, puis codés par un codage entropique.

Ces techniques de codage compressif sont efficaces mais ne sont pas optimales pour compresser des images présentant des régions de texture homogène. En effet dans la norme H.264/MPEG-4 AVC, la prédiction spatiale d'un macrobloc dans une image par rapport à un autre macrobloc dans cette même image n'est possible que si cet autre macrobloc est un macrobloc avoisinant le macrobloc à prédire et se trouvant dans certaines directions prédéterminées par rapport à celui-ci, c'est-à-dire généralement au dessus et à gauche, dans un voisinage dit "causal". De même, la prédiction des vecteurs de mouvement d'un bloc ou macrobloc d'une image est une prédiction causale par rapport aux vecteurs de mouvement de blocs voisins.

Ce type de prédiction ne permet donc pas d'exploiter la similarité de texture de macroblocs de zones de même texture disjointes, ou de macroblocs éloignés se trouvant dans une zone de même texture. Autrement dit ce type de technique ne permet pas d'adresser simultanément un groupe de macroblocs possédant des caractéristiques communes en tant qu'entité unique. De plus le mouvement de zones de texture homogènes d'une image à une autre n'est pas non plus exploité de façon optimale: en effet la prédiction temporelle de la norme H.264/MPEG-4 AVC permet d'exploiter le mouvement d'un macrobloc d'une image à une autre, mais pas l'appartenance de ce macrobloc à une zone possédant un mouvement homogène.

Certaines techniques dites de codage par régions ont proposé, pour résoudre ce problème, de segmenter les images d'une séquence vidéo de manière à isoler des zones de texture ou de mouvement homogènes dans ces images préalablement à leur codage. Ces zones définissent des objets dans ces images, sur lesquels on choisit par exemple d'utiliser un codage plus fin ou au contraire plus grossier. Un exemple d'une telle technique est donné dans l'article IEEE (d'après l'anglais "Institute of Electrical and Electronics Engineers") intitulé "An encoder-decoder texture replacement method with application to content-based movie coding" de A. Dumitras et al., publié en 2004.

Cependant ces techniques de codage par régions nécessitent de transmettre, au décodeur destinataire de la séquence vidéo, une carte de segmentation, calculée par image au niveau du codeur qui émet cette séquence vidéo. Cette carte de segmentation est très coûteuse en terme de place mémoire car les frontières de cette carte de segmentation ne correspondent généralement pas aux frontières des blocs de pixels des images segmentées. De plus la segmentation d'une séquence vidéo en régions de formes arbitraires n'est pas déterministe: les frontières de la carte de segmentation ne correspondent généralement pas aux frontières des objets réels que cette carte tente de découper dans les images de la séquence vidéo. De ce fait, seule la représentation de telles cartes de segmentation et leur transmission a été normalisée (norme MPEG-4 partie 2), et non leur production.

En conclusion, les techniques de segmentation sont nombreuses et aucune d'entre elles n'est assez générique pour donner une segmentation efficace de n'importe quelle séquence d'images. Ces techniques complexes et non déterministes n'ont en conséquence jamais été déployées dans des codeurs industriels.

La présente invention vise à résoudre les inconvénients de la technique antérieure en fournissant des procédés et des dispositifs de codage et de décodage d'images, dans lesquels des données spécifiques à chaque bloc ou macrobloc, telles que des données de texture ou de couleur, sont mutualisées entre blocs ou macroblocs ayant une texture ou une couleur similaires.

Ainsi on dispose des avantages de mutualisation des informations des méthodes par région sans les inconvénients d'une segmentation fine exigeant la transmission d'une carte de segmentation.

A cette fin, l'invention propose un procédé de codage d'une image ou d'une séquence d'images générant un flux de données comportant des données représentatives de groupes de pixels dans une desdites images, dits blocs, comportant les étapes de :
- regroupement de blocs dans une grappe de blocs, selon la proximité de leurs valeurs respectives correspondant à au moins un paramètre de bloc à coder,
- détermination d'une valeur dudit paramètre, ladite valeur étant caractéristique de ladite grappe de blocs,
caractérisé en ce qu'il comporte l'étape de :
- codage des blocs de ladite grappe, dans lequel les valeurs desdits blocs pour ledit paramètre sont codées implicitement par héritage de ladite valeur caractéristique, ou sont codées comme des raffinements par rapport à ladite valeur caractéristique, et codage d'une structure de données associée à ladite grappe de blocs, ladite structure de données comportant une donnée associée à ladite valeur caractéristique.

Grâce à l'invention, on mutualise des données spécifiques aux blocs appartenant à des zones de texture, de couleur ou de mouvement homogènes, de manière très flexible par rapport aux techniques de l'art antérieur. En effet le regroupement de blocs par grappes de blocs ayant une texture homogène inclus éventuellement des blocs qui sont éloignés les uns des autres, ou qui appartiennent à des zones disjointes. De plus, le fait d'associer une structure de données à chacune de ces grappes permet de mutualiser des données d'en-têtes de blocs également. Enfin l'invention ne nécessite pas de transmettre de carte de segmentation au décodeur destinataire de l'image ou des images codées par le procédé de codage selon l'invention.

Le codage implicite par héritage d'une valeur d'un paramètre pour un bloc considéré signifie que cette valeur n'est pas codée pour ce bloc. Au décodage, la valeur caractéristique déterminée pour la grappe est affectée au paramètre du bloc considéré.

Le codage par raffinement d'une valeur d'un paramètre pour un bloc considéré signifie qu'une valeur de raffinement de cette valeur est codée pour le bloc considéré. Au décodage, la valeur qui est affectée au paramètre du bloc considéré est la valeur caractéristique déterminée pour la grappe, à laquelle est additionnée la valeur de raffinement.

Selon une caractéristique avantageuse, ladite valeur caractéristique correspond à la valeur d'un bloc de ladite grappe pour ledit paramètre à coder.

En effet dans un mode de réalisation de l'invention, on utilise un bloc particulier de l'image comme structure de données associée à une grappe de blocs, ce qui permet de faire bénéficier la grappe d'une information de ce bloc, par exemple de la prédiction temporelle utilisée pour coder ce bloc, lorsque ce bloc appartient à une image inter.

Selon une autre caractéristique avantageuse, dans l'étape de regroupement de blocs, au moins un sous-bloc d'un des blocs ainsi regroupés n'est pas affecté à ladite grappe de blocs, une information de partitionnement dudit bloc déterminant les sous-blocs dudit bloc affectés à ladite grappe étant codée dans ladite structure de données, ou dans ledit bloc lors de ladite étape de codage de blocs de ladite grappe.

Cette caractéristique permet de définir des zones de texture ou de mouvement homogène de manière précise: en effet certains sous-blocs n'étant pas affectés à la grappe de blocs auxquels ils appartiennent, cette grappe regroupe en réalité des sous-blocs, qui dessinent une zone plus ciselée que celle formée par leurs blocs d'appartenance.

Selon une autre caractéristique avantageuse, ladite grappe de blocs est associée à une donnée de priorité de décodage des blocs de ladite grappe par rapport à d'autres blocs ou grappes de blocs de ladite image.

Cette donnée de priorité est utile dans certains cas pour spécifier au décodeur un ordre de décodage des données associées aux grappes ou aux blocs. Par exemple lorsque certains sous-blocs d'un bloc ne sont pas affectés à une grappe à laquelle appartient ce bloc, il peut être préférable de décoder d'abord les sous-blocs du bloc affectés à la grappe. De même si une grappe de blocs est définie comme une grappe de plusieurs grappes, il est préférable de décoder d'abord la structure de donnée associée à cette grappe, avant de décoder les structures de données associées aux grappes incluses dedans.

Selon une autre caractéristique avantageuse, lorsque le procédé de codage selon l'invention est utilisé pour coder une séquence d'images, ladite grappe de blocs est associée à une donnée de durée de vie correspondant à un nombre d'images successives de ladite séquence d'images, ladite structure de données associée à ladite grappe étant codée une seule fois pour lesdites images successives.

Cette donnée de durée de vie permet de mutualiser les données communes entre grappes d'une image à une autre, ce qui exploite la dimension temporelle des images à coder, en plus de leur dimension spatiale.

L'invention concerne aussi un procédé de décodage d'un flux de données représentatif d'une image ou d'une séquence d'images, ledit flux comportant des données représentatives de groupes de pixels dans une desdites images, dits blocs, caractérisé en ce qu'il comporte les étapes de :
- décodage d'une structure de données associée à un ensemble desdits blocs, dit grappe de blocs, et d'au moins une valeur caractéristique associée correspondant à un paramètre de codage de bloc,
- et décodage d'un bloc de ladite grappe, attribuant audit paramètre de codage, si ledit paramètre n'est pas codé pour ledit bloc, ladite valeur caractéristique, ou, si ledit paramètre est codé pour ledit bloc, une valeur de raffinement de ladite valeur caractéristique calculée à partir de la valeur correspondant audit paramètre codé.

Selon une caractéristique avantageuse, ladite étape de décodage d'un bloc est précédée d'une étape de décodage d'une information de partitionnement dudit bloc, déterminant les sous-blocs dudit macrobloc affectés à ladite grappe de blocs, les sous-blocs dudit bloc non affectés à ladite grappe étant décodés sans utiliser ladite valeur caractéristique.

L'invention concerne également un signal porteur d'un flux de données représentatif d'une image ou d'une séquence d'images, ledit flux comportant des données représentatives de groupes de pixels dans une desdites images, dits blocs, caractérisé en ce que
- ledit flux comporte en outre des données représentatives d'une structure de données associée à un ensemble desdits blocs, dit grappe de blocs, ladite structure comprenant au moins une donnée représentative d'une valeur caractéristique de ladite grappe de blocs et correspondant à un paramètre de codage de bloc,
- et en ce que les données représentatives d'un bloc de ladite grappe ne contiennent pas de donnée représentative d'une valeur dudit paramètre de codage, ou contiennent une donnée représentative d'un raffinement de ladite valeur caractéristique.

L'invention concerne encore un dispositif de codage d'une image ou d'une séquence d'images générant un flux de données comportant des données représentatives de groupes de pixels dans une desdites images, dits blocs, comportant :
- des moyens de regroupement de blocs dans une grappe de blocs, selon la proximité de leurs valeurs respectives correspondant à au moins un paramètre de bloc à coder,
- des moyens de détermination d'une valeur caractéristique de ladite grappe de blocs pour ledit paramètre à coder,
caractérisé en ce qu'il comporte :
- des moyens de codage d'une structure de données associée à ladite grappe de blocs, ladite structure de données comportant une donnée associée à ladite valeur caractéristique,
- et des moyens de codage des blocs de ladite grappe, comportant
   o des moyens de codage implicite des valeurs desdits blocs pour ledit paramètre par héritage de ladite valeur caractéristique,
   o et/ou des moyens de codage desdites valeurs comme des raffinements de ladite valeur caractéristique.

L'invention concerne aussi un dispositif de décodage d'un flux de données représentatif d'une image ou d'une séquence d'images, ledit flux comportant des données représentatives de groupes de pixels dans une desdites images, dits blocs, caractérisé en ce qu'il comporte :
- des moyens de décodage d'une structure de données associée à un ensemble desdits blocs, dit grappe de blocs, et d'au moins une valeur caractéristique de ladite grappe de blocs correspondant à un paramètre de codage de bloc,
- et des moyens de décodage d'un bloc de ladite grappe, attribuant audit paramètre de codage, si ledit paramètre n'est pas codé pour ledit bloc, ladite valeur caractéristique, ou, si ledit paramètre est codé pour ledit bloc, une valeur de raffinement de ladite valeur caractéristique calculée à partir de la valeur correspondant audit paramètre codé.

L'invention concerne encore un programme d'ordinateur comportant des instructions pour mettre en oeuvre l'un des procédés selon l'invention, lorsqu'il est exécuté sur un ordinateur.

D'autres caractéristiques et avantages apparaîtront à la lecture de modes de réalisation préférés décrits en référence aux figures suivantes, dans lesquelles :
- la figure 1 représente des étapes du procédé de codage selon l'invention,
- la figure 2 représente un premier mode de réalisation d'un dispositif de codage selon l'invention,
- la figure 3 représente une image que l'on code selon l'invention,
- la figure 4 représente une variante de codage de macroblocs d'une image codée selon l'invention,
- la figure 5 représente une autre variante de codage de macroblocs d'une image codée selon l'invention,
- la figure 6 représente un dispositif de décodage selon l'invention,
- la figure 7 représente des étapes du procédé de décodage selon l'invention,
- la figure 8 représente un second mode de réalisation d'un dispositif de codage selon l'invention,
- la figure 9 représente encore une autre variante de codage de macroblocs d'une image codée selon l'invention,
- et la figure 10 représente un vecteur de mouvement associé au mouvement d'une grappe de macroblocs dans une image codée selon l'invention.

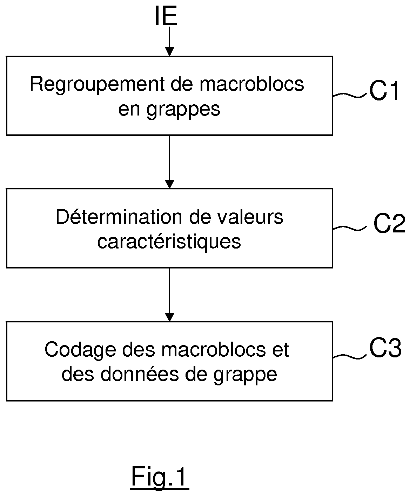

Trois modes de réalisation de l'invention sont maintenant décrits, dans lesquels le procédé de codage selon l'invention est utilisé pour coder une séquence d'images selon un flux binaire proche de celui qu'on obtient par un codage selon la norme H.264/MPEG-4 AVC. Dans ces modes de réalisation, le procédé de codage selon l'invention est par exemple implémenté de manière logicielle ou matérielle par modifications d'un codeur initialement conforme à la norme H.264/MPEG-4 AVC. Le procédé de codage selon l'invention est représenté sous la forme d'un algorithme comportant des étapes C1 à C3, représentées à la **figure 1** et génériques aux trois modes de réalisation de l'invention.

Il est à noter que le procédé de décodage selon l'invention est symétriquement implémenté de manière logicielle ou matérielle par modifications d'un décodeur initialement conforme à la norme H.264/MPEG-4 AVC.

De plus le codage H.264/MPEG-4 AVC utilisant un découpage d'images en macroblocs de pixels, correspondant à des blocs de blocs de pixels, dans ces exemples de réalisation le procédé de codage selon l'invention regroupe en grappes des macroblocs. Cependant l'invention est aussi utilisable pour coder ou décoder une image isolée, ou une séquence d'images quelconque composée de blocs de pixels. Ainsi l'invention est également implémentable par exemple en modifiant un codeur vidéo initialement conforme à la norme SVC, d'après l'anglais "Scalable Video Coding" pour "codage vidéo échelonnable", extension de la norme H.264/MPEG-4 AVC actuellement en cours de standardisation auprès du "Joint Video Team (JVT)".

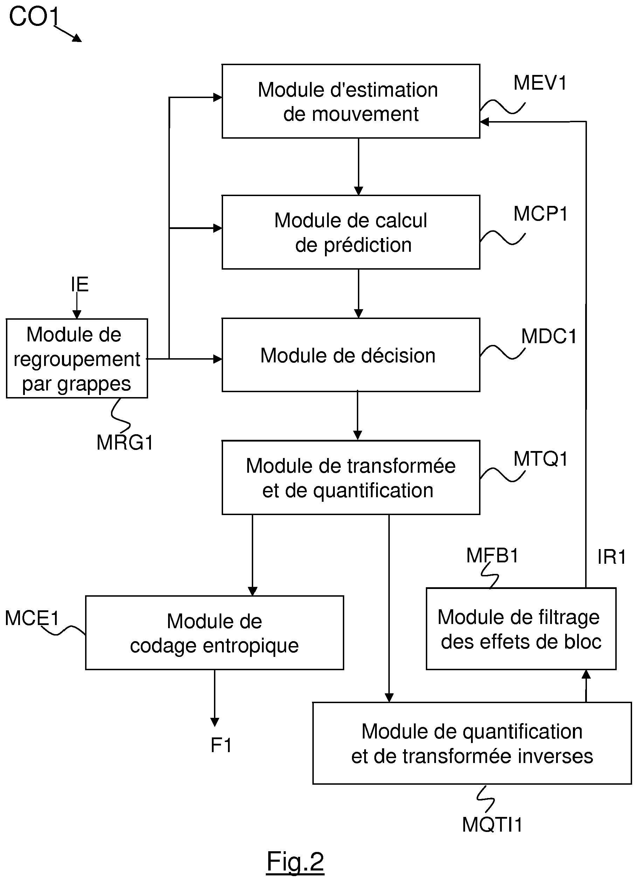

Selon un premier mode de réalisation de l'invention, le procédé de codage selon l'invention est implémenté dans un dispositif de codage CO1 représenté à la **figure 2****.**

La première étape C1, représentée à la **figure 1**, est le regroupement de macroblocs d'une image IE de la séquence d'images à coder, dans une ou plusieurs grappes de macroblocs. Pour cela l'image IE est appliquée en entrée d'un module MRG1 de regroupement de macroblocs par grappes, représenté à la **figure 2****.**

Ce module MRG1 de regroupement par grappes utilise par exemple une méthode de croissance de région appelée encore méthode de "K-means clustering", algorithme qui consiste à segmenter un ensemble d'éléments en classes d'éléments par des mesures de distance entre les caractéristiques des éléments de l'ensemble à segmenter. Une telle méthode est décrite dans l'article IEEE de T. Kanungo et al., intitulé "An Efficient k-Means Clustering Algorithm: Analysis and Implementation", et publié en 2002. Le module MRG1 de regroupement par grappes effectue ainsi une pré-analyse des images de la séquence d'images à coder, avant de les transmettre avec des informations définissant les grappes de macroblocs définies pour chaque image de la séquence, aux modules MEV1 d'estimation de mouvement, MCP1 de calcul de prédiction et MDC1 de module de décision. Le fonctionnement de ces modules est détaillé plus loin.

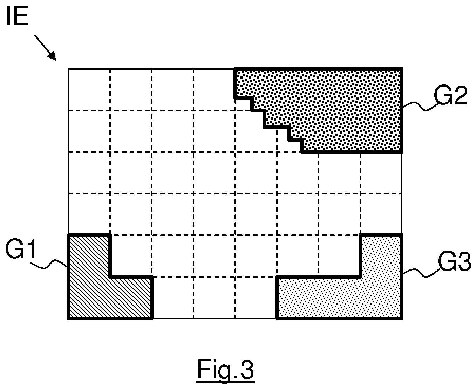

Dans cette étape C1, des macroblocs de l'image IE sont ainsi regroupés par grappes en fonction de la similarité des orientations de leurs textures, définies en termes de contours et de gradients de texture, ou en fonction de la similarité de leurs couleurs. Trois grappes G1, G2 et G3 sont ainsi déterminées, comme représenté à la **figure 3****.** La grappe G1 rassemble des macroblocs de texture et de mouvement très proches, la grappe G2 rassemble des macroblocs d'orientations similaires (c'est-à-dire que les contours qui passent dans ces macroblocs respectent une certaine orientation ou que la texture de ces macroblocs est globalement orientée selon une direction privilégiée) et la grappe G3 rassemble des macroblocs de texture homogène.

Il est à noter que certains blocs des macroblocs de la grappe G2 ne sont pas affectés à la grappe G2, ce qui cisèle une partie du contour de la grappe G2.

De plus dans ce premier mode de réalisation, ainsi que dans le deuxième mode de réalisation décrit plus loin, seules des données de texture sont mutualisées à travers des données de grappe de macrobloc. Le troisième mode de réalisation détaille plus loin un exemple d'utilisation de l'invention pour mutualiser des données de mouvement entre macroblocs appartenant à une grappe de mouvement homogène.

L'étape suivante C2 est la détermination d'une ou plusieurs valeurs caractérisant chacune des grappes G1, G2 et G3 déterminées à l'étape C1. Cette détermination est effectuée par le module MRG1 de regroupement par grappes, qui attribue des valeurs caractéristiques de texture aux grappes G1 et G3, et une valeur caractéristique d'orientation de texture à la grappe G2. La valeur d'orientation de texture attribuée à la grappe G2 est par exemple la moyenne des valeurs des orientations des contours de chacun des macroblocs de la grappe G2. De même les valeurs de texture attribuées aux grappes G1 et G3 sont par exemple les moyennes respectives des valeurs de texture des macroblocs respectivement de la grappe G1 et de la grappe G3.

Il est à noter que le module MRG1 détermine éventuellement, lorsqu'une grappe le permet, plusieurs valeurs caractéristiques pour cette grappe. Une telle grappe est ainsi par exemple associée à une valeur moyenne de pixel et une valeur d'orientation de texture. Il est en effet possible de coder une texture de plusieurs manières, insérées par exemple en complément des méthodes existantes dans un codeur H.264/MPEG-4 AVC :
- soit on la code sous forme d'une orientation associée à une couleur, ces deux données permettant de resynthétiser la texture,
- soit on la code directement sous forme d'un carré de pixels,
- soit on stocke seulement des valeurs statistiques de texture (moyenne, variance...) de manière à la régénérer de manière complètement paramétrique.

Le choix entre ces deux codages dépend par exemple du coût du codage utilisé en termes de débit.

Il est à noter que le terme "valeur" est ici employé dans le sens de "valeur d'un paramètre", et désigne donc éventuellement, en fonction de ce paramètre, plusieurs valeurs. Dans cet exemple de réalisation, on se réfère pour les paramètres de codage utiles des macroblocs, c'est-à-dire autres que ceux présents dans les en-têtes des données de macroblocs, à ceux définis par la norme H.264/MPEG-4 AVC. Par exemple en fonction de l'option de codage choisie, une valeur de texture de macrobloc correspond à trois carrés ou matrices de valeurs, qui sont un carré de valeurs de luminance, et deux carrés de valeurs de chrominance.

A la fin de l'étape C2, le module MRG1 de regroupement par grappes transmet l'image IE ainsi que les informations définissant les grappes G1, G2 et G3 aux modules MCP1 de calcul de prédiction et MDC1 de décision. Les informations définissant une des grappes G1, G2 ou G3 sont les suivantes :
- les index des macroblocs regroupés dans cette grappe,
- la ou les valeurs caractéristiques attribuées à cette grappe à l'étape C2, telles qu'une valeur caractéristique d'orientation de texture,
- pour chaque macrobloc de cette grappe pour lequel un ou plusieurs blocs ou sous-blocs ne sont pas affectés à cette grappe, une information de partitionnement définissant les blocs et sous-blocs du macrobloc affectés à cette grappe,
- si cette grappe est présente sur plusieurs images consécutives, éventuellement une donnée de durée de vie de la grappe, par exemple égale au nombre d'images suivantes encore concernées par cette grappe, ainsi que des données de mise à jour des index des macroblocs appartenant à cette grappe par rapport à l'image précédente, éventuellement des informations de partitionnement associées aux macroblocs mis à jour, dans le cas où ceux-ci contiennent des blocs ou sous-blocs non affectés à cette grappe, et des informations de mise à jour des valeurs caractéristiques de la grappe par rapport à celles qui lui ont attribuées dans une image précédente,
- si la grappe doit être décodée avant ou après d'autres grappes de macroblocs, ou avant ou après les macroblocs non affectés à des grappes, appelés macroblocs "libres", une donnée de priorité de décodage.

L'étape suivante C3 est le codage des valeurs caractéristiques déterminées à l'étape C2, dans des structures de données associées à chacune des grappes G1, G2 et G3, et le codage des macroblocs de l'image IE.

Lors du codage d'une grappe, si une durée de vie lui est associée, le module MCP1 de calcul de prédiction calcule éventuellement la différence entre les valeurs caractéristiques attribuées à la grappe à l'étape C2 pour l'image IE et les valeurs caractéristiques attribuées à la grappe à l'étape C2 pour l'image précédente. Ainsi seuls les résidus de prédictions temporelles (informations de mise à jour) des valeurs caractéristiques sont codés d'une image à l'autre pour cette grappe, sauf bien sûr pour la première image dans laquelle cette grappe est apparue. En variante, si une durée de vie est associée à cette grappe, aucune valeur caractéristique n'est codée pour les images suivant la première image dans laquelle cette grappe est apparue (pas de mise à jour des valeurs caractéristiques). Dans cette variante, le décodeur selon l'invention réutilise en effet toujours les mêmes valeurs caractéristiques de la grappe, à savoir celles reçues pour la première image dans laquelle cette grappe est apparue.

Le codage des valeurs caractéristiques d'une grappe, ou des prédictions de ces valeurs caractéristiques, est effectué par le module de décision MDC1, de manière similaire au codage des valeurs correspondantes d'un macrobloc au format H.264/MPEG-4 AVC.

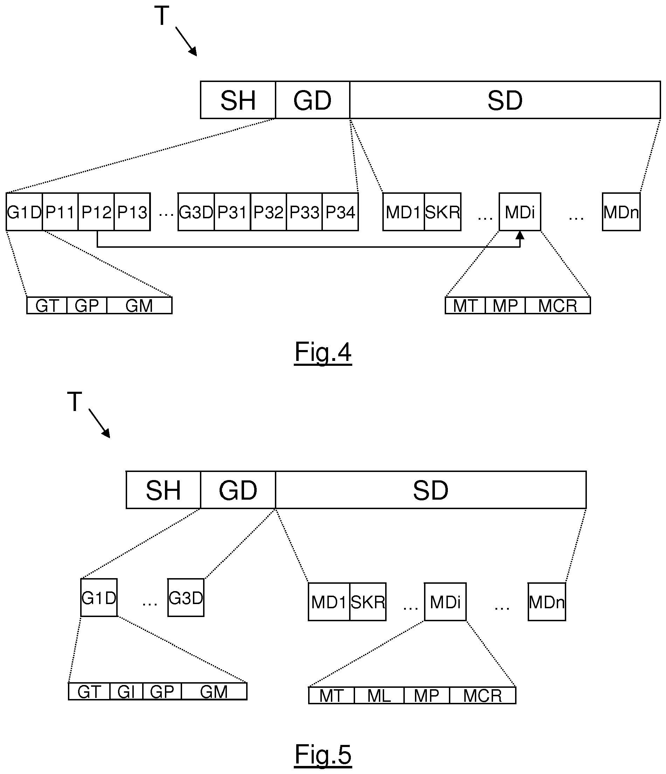

La **figure 4** montre une tranche T de macroblocs de l'image IE, codée selon une variante de l'invention. Par rapport au format H.264/MPEG-4 AVC, un champ GD codant les données spécifiques aux grappes des macroblocs de la tranche est inséré entre le champ SH de données d'en-tête de la tranche, et le champ SD de données de macroblocs.

Ce champ GD code les structures de données associées à chaque grappe, dans lesquelles sont codées les valeurs caractéristiques de ces grappes. Elles contiennent, dans cet exemple de réalisation, une syntaxe proche de celle de H.264. Ainsi la structure de données associée à la grappe G1 comprend des données G1D et des pointeurs P11, P12 et P13 qui pointent chacun sur un macrobloc de la grappe G1. Les données G1D comprennent :
- un champ GT spécifiant un type de codage pour la grappe, par exemple un codage intra ou inter,
- un champ GP indiquant le type de prédiction utilisé pour coder les valeurs caractéristiques de la grappe (pas de prédiction ou la position des valeurs de prédiction),
- et un champ GM contenant le codage de la ou les valeurs caractéristiques de la grappe, éventuellement prédites, et éventuellement une durée de vie associée à la grappe, une donnée de priorité de décodage.

La durée de vie associée à une grappe est en variante codée de manière implicite, par exemple si cette durée est égale à la durée d'un groupement d'images (ou GOP pour "Group Of Pictures" en anglais).

Le champ GD contient également les données des grappes G2 et G3, les données de la grappe G3 étant représentées sur la **figure 4** par un champ de données G3D suivi de pointeurs P31, P32, P33 et P34 sur les macroblocs de la grappe G3.

Lorsqu'un pointeur porte sur un macrobloc dont certains blocs seulement ne sont pas affectés à une grappe, par exemple un des pointeurs de la grappe G2, celui-ci est codé dans une structure de donnée comportant des données de partitionnement du macrobloc. Ces données de partitionnement sont explicitées plus loin.

Il est à noter que la tranche T correspond en général à l'image IE entière. Dans le cas où les tranches de macroblocs utilisées ne contiennent chacune qu'une partie de l'image IE, on utilise par exemple un mécanisme de type FMO ("Flexible Macroblock Ordering") pour regrouper les données d'une grappe ainsi que les données de macroblocs associés à cette grappe dans une même tranche de macroblocs.

La **figure 5** montre la tranche T de macroblocs codée selon une autre variante de l'invention. Par rapport à la variante de la **figure 4****,** les données G1D comportent en plus un champ GI d'indice de grappe, et les structures de données associées à chacune des grappes ne contiennent pas de pointeurs sur les macroblocs appartenant à ces grappes. En effet l'indication de l'appartenance d'un macrobloc à une grappe se fait autrement, par l'utilisation d'un champ ML codé dans chaque macrobloc, qui comporte un ou plusieurs indices de grappe, comme détaillé plus loin en relation avec l'étape C3 de codage de macroblocs. De ce fait, dans cette variante de codage, pour une grappe donnée, les données de grappe GD ne contiennent pas de données de mise à jour des macroblocs regroupés dans la grappe, ni de donnée de priorité de décodage.

Il est à noter que ces deux variantes de codage permettent de faire appartenir un même macrobloc à plusieurs grappes. Ainsi ce macrobloc hérite par exemple d'une valeur caractéristique d'une première grappe, et d'une autre valeur caractéristique d'une autre grappe.

De plus, les données de priorité associées à certaines grappes permettent de "connecter" ces grappes: par exemple si l'on utilise les valeurs caractéristiques d'une grappe pour prédire les valeurs caractéristiques d'une autre grappe, ces données de priorité sont utilisées pour indiquer au décodeur qu'il est nécessaire de décoder en premier lieu la grappe servant de référence puis de décoder l'autre grappe prédite à partir de cette grappe de référence.

Dans cette étape C3, on code également les macroblocs de l'image IE. Comme dans la norme H.264/MPEG-4 AVC, le module de calcul de prédiction MCP1 calcule différentes prédictions possibles des macroblocs de l'image IE. Ces prédictions sont calculées à partir de l'image IE ou d'autres images de la séquence, précédemment codées puis décodées et insérées dans une liste d'images de référence IR1. Ces images de référence IR1 sont construites à partir des images initiales de la séquence d'image à coder conformément à la norme H.264/MPEG-4 AVC :
- un codage par transformée en cosinus discrète et quantification est effectué par le module MTQ1 de transformée et de quantification,
- puis un décodage par transformée en cosinus discrète inverse et quantification inverse est effectué par le module MTQI1 de transformée et de quantification inverse,
- et enfin un module MFB1 de filtrage d'effets de bloc réduit les effets de blocs sur les images ainsi codées et décodées pour fournir en sortie les images de référence IR1.

Les prédictions calculées par le module de calcul de prédiction MCP1 dépendent du type de l'image IE :
- Si l'image IE est une image de type intra, c'est-à-dire une image codée sans prédiction temporelle par rapport à des macroblocs d'autres images de la séquence à coder, le module MCP1 de calcul de prédiction calcule les prédictions spatiales possibles de chaque macrobloc de l'image IE par rapport à d'autres macroblocs de l'image IE.
- Si l'image IE est une image de type inter, c'est-à-dire pour laquelle il est possible de coder un macrobloc par prédiction temporelle par rapport à des macroblocs d'autres images de la séquence à coder, alors le module MEV1 calcule les mouvements entre l'image IE et une ou plusieurs images de référence IR1. Le module MCP1 de calcul de prédiction calcule ensuite les prédictions temporelles possibles de chaque macrobloc de l'image IE par rapport à des macroblocs d'autres images de la séquence à coder, et également les prédictions spatiales possibles de chaque macrobloc de l'image IE par rapport à d'autres macroblocs de l'image IE.

En plus des prédictions temporelles et spatiales prévues par la norme H.264/MPEG-4 AVC, le module de calcul de prédiction MCP1 calcule, pour les macroblocs de l'image IE appartenant à une grappe, les différences entre les valeurs caractéristiques de cette grappe et les valeurs correspondantes de ces macroblocs.

Une fois les prédictions possibles calculées par le module de calcul de prédiction MCP1, le module de décision MDC1 parcourt les macroblocs de l'image IE et choisit, dans cette étape C3, le type de prédiction utilisé pour coder chacun de ces macroblocs. Parmi les prédictions possibles pour un macrobloc, le module de décision MDC1 choisit la prédiction optimale selon un critère débit distorsion, ou choisit de ne pas utiliser de prédiction si le critère débit distorsion pour l'option "pas de prédiction" est meilleur que toutes les prédictions possibles. Un critère débit distorsion utilisable est donné dans l'article IEEE "Rate-Constrained Coder Control and Comparison of Video Coding Standards" de T. Wiegang et al., publié en juillet 2003.

Lorsque le macrobloc parcouru par le module de décision MDC1 est un macrobloc libre, c'est-à-dire n'appartenant à aucune grappe, le module de décision MDC1 code ce macrobloc selon une prédiction spatiale ou temporelle, ou sans prédiction, selon le type inter ou intra de l'image IE et l'optimisation possible du critère débit-distorsion.

Lorsqu'en revanche le macrobloc parcouru par le module de décision MDC1 est un macrobloc appartenant à une grappe, le module de décision MDC1 code ce macrobloc soit en utilisant les données de cette grappe, soit de la même façon qu'un macrobloc libre, en fonction du choix qui optimise le critère débit-distorsion.

Il est à noter que lorsqu'un macrobloc appartenant à une grappe est codé comme un macrobloc libre, alors dans la variante de codage de la **figure 4**, les données de cette grappe ne contiennent pas de pointeur sur ce macrobloc. C'est pourquoi le codage des données de grappe est effectué en même temps que le codage des macroblocs de la grappe. Autrement dit la "production de syntaxe" de la tranche T a lieu après que tous les "choix de codage" pour cette tranche aient été finalisé, à la fois pour les données de grappe et pour les données de macroblocs.

Les macroblocs de l'image IE sont codés par tranches de macroblocs selon une des variantes représentés aux **figures 4 et 5**. Par exemple pour la tranche T, les macroblocs sont chacun codés dans un champ MDi parmi les champs MD1 à MDn que comporte le champ SD réservé aux données de macroblocs. Le champ SKR représente un macrobloc codé selon le mode "skip_run" de la norme H.264/MPEG-4 AVC.

Dans la variante de la **figure 4****,** les macroblocs libres sont codés comme dans la norme H.264/MPEG-4 AVC: ils comportent chacun un champ MT précisant le type inter ou intra du macrobloc considéré, un champ MP indiquant la direction de prédiction utilisée (spatiale pour les macroblocs intra, vecteurs de mouvement pour les macroblocs inter) et un champ MCR codant les valeurs des résidus du macrobloc. En revanche pour un macrobloc appartenant à une grappe :
- le champ MT n'est pas présent,
- le champ MP est présent pour indiquer le mode de prédiction des valeurs du macrobloc correspondant à des paramètres autres que ceux correspondant aux valeurs caractéristiques de la grappe
- et le champ MCR apparaît dans le cas où un résidu est codé pour raffiner les données héritées de la grappe.

Dans la variante de la **figure 5****,** les macroblocs libres sont également codés comme dans la norme H.264/MPEG-4 AVC, mais les macroblocs appartenant à une grappe ont un nouveau type de macrobloc, par exemple "MB_CLUSTER", codé dans le champ MT et indiquant leur appartenance à une grappe. Lorsqu'un macrobloc a le type "MB_CLUSTER", il a également un nouveau champ d'en-tête ML, comportant un ou plusieurs indices de grappe, pour indiquer la ou les grappes à laquelle ou auxquelles appartient le macrobloc.

D'autres variantes de codage sont bien sûr envisageables. Par exemple dans une autre variante de codage, les macroblocs sont codés de la même façon que dans la variante de la **figure 5** à la différence près que le champ d'en-tête ML est un simple drapeau valant 0 ou 1 suivant leur appartenance ou non à une grappe. Il est à noter néanmoins que cette autre variante ne permet pas de faire appartenir un macrobloc à plusieurs grappes.

De plus dans ces variantes, le codage du champ MCR d'un macrobloc utilisant les données d'une grappe est le suivant :
- les valeurs des paramètres de codage du macrobloc qui n'ont pas de valeurs correspondantes dans les données de la grappe à laquelle il appartient, sont codées de manière similaire au codage AVC, en utilisant la prédiction indiquée dans le champ MP.
- les valeurs des paramètres de codage du macrobloc qui ont des valeurs correspondantes dans les données de la grappe à laquelle il appartient, ne sont pas codées, ou seules les différences entre les valeurs caractéristiques de la grappe et les valeurs correspondantes du macrobloc sont codées. Le choix de ne rien coder pour ces valeurs ou de ne coder que des valeurs de raffinement s'effectue par exemple en utilisant un critère de débit/distorsion entre ces valeurs caractéristiques et les valeurs correspondantes du macrobloc.

Ainsi, la trame T comporte des macroblocs dont certaines valeurs de paramètre ne sont pas codées explicitement, mais sont codées implicitement par héritage de valeurs caractéristiques codées dans les données de grappes GD.

Lorsque certains blocs seulement d'un macrobloc n'appartiennent pas à une grappe, l'information de partitionnement associée au macrobloc indique le découpage du macrobloc, permettant de déterminer quels blocs sont affectés à la grappe, les autres blocs, appelés ensuite blocs "libres", n'y étant pas affectés. Dans la variante de la **figure 5****,** ce découpage est par exemple codé par un drapeau associé à chaque bloc du macrobloc et indiquant si ce bloc est libre ou non. Le codage des blocs affectés à la grappe s'effectue de manière similaire au codage d'un macrobloc entièrement affecté à la grappe, c'est-à-dire que les valeurs de ces blocs, pour les paramètres correspondant aux valeurs caractéristiques de la grappe, héritent de ces valeurs caractéristiques ou les raffinent. Pour les blocs libres, l'information de partitionnement indique pour chaque bloc le type de prédiction AVC utilisé. De plus, le voisinage par défaut utilisé pour déterminer des directions de prédiction est modifié, de sorte que les blocs libres n'utilisent pas les blocs du macrobloc qui appartiennent à la grappe.

Une fois ce codage structurel effectué par le module de décision MDC1, les coefficients de résidus s'ils existent, correspondants aux blocs de l'image IE sont envoyés au module MTQ1 de transformée et de quantification, pour subir des transformées en cosinus discrètes puis une quantification. Les tranches de macroblocs avec ces coefficients quantifiés sont ensuite transmises au module MCE1 de codage entropique, pour produire, avec les autres images de la séquence vidéo déjà codées de la même façon que l'image IE, un flux vidéo F1, binaire, codé selon l'invention.

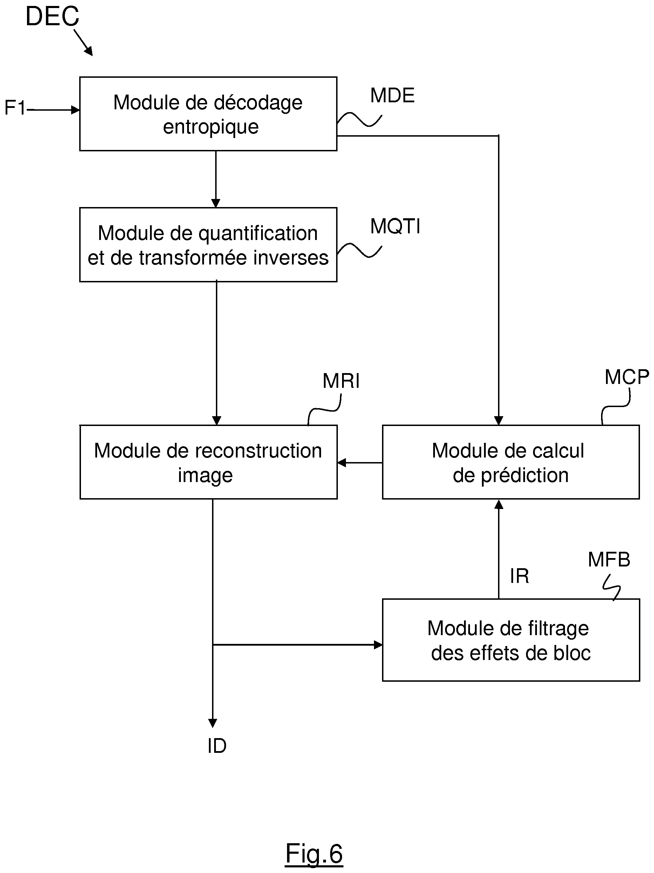

Le flux binaire F1 ainsi codé est transmis par un réseau de communication, à un terminal distant. Celui-ci comporte un décodeur DEC selon l'invention, représenté à la **figure 6****.**

Le flux binaire F1 est d'abord envoyé au module MDE de décodage entropique, décodage inverse de celui effectué par le module MCE1. Puis pour chaque bloc d'image à reconstruire, les coefficients décodés par le module MDE s'ils existent sont envoyés au module MQTI de quantification inverse et de transformée inverse.

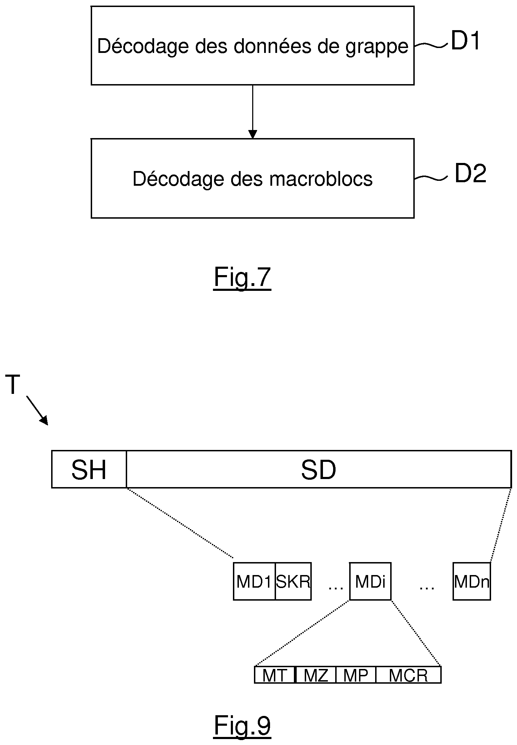

Le module MRI de reconstruction d'image reçoit alors des données décodées correspondant aux données produites par le module MDC1 à l'étape C3 de codage selon l'invention, aux erreurs de transmission près. Le module MRI met en oeuvre des étapes D1 et D2 du procédé de décodage selon l'invention, représentées à la **figure 7****.** Symétriquement au procédé de codage selon l'invention, ces étapes sont génériques aux trois modes de réalisation de l'invention.

La première étape D1 est le décodage de structures de données de grappes codées dans les tranches de macroblocs de l'image IE. Pour une grappe donnée, le module MRI vérifie grâce au champ GP d'en-tête des données de la grappe, si une prédiction temporelle a été utilisée ou non pour le codage des données de cette grappe.

Si une prédiction a été utilisée par rapport à une image précédente du flux F1 ou une partie de l'image courante, le module MRI utilise, pour décoder les valeurs caractéristiques de la grappe, des valeurs de prédiction fournies par le module MCP de calcul de prédiction, représenté sur la **figure 6**. Le module MCP reçoit en effet :
- des images IR de référence de la séquence d'images à décoder, correspondant à des images de la séquence précédemment reconstruites par le module de reconstruction MRI et qui ont subi un filtrage par le module MFB pour réduire les effets de bloc dus au décodage,
- et les valeurs caractéristiques des grappes précédemment décodées par le module de reconstruction MRI, valeurs qu'il garde en mémoire.

Pour chaque valeur caractéristique de la grappe, les valeurs de prédiction sont alors ajoutées aux valeurs décodées par le module MQTI.

Si le champ GP de la grappe n'indique pas de prédiction temporelle, alors les valeurs décodées par le module MQTI sont utilisées telles qu'elles comme valeurs caractéristiques de la grappe.

Une fois les valeurs caractéristiques de chaque grappe de l'image IE décodées, si l'image IE a été codée selon la variante de la **figure 4**, le module MRI établit pour chaque grappe de l'image IE, une liste des macroblocs associés à cette grappe, et éventuellement des blocs individuellement affectés à cette grappe si certains blocs sont partitionnés.

Comme expliqué en relation avec le procédé de codage selon l'invention, certaines grappes ayant une durée de vie sur plusieurs images et codées selon la variante de codage de la **figure 4****,** contiennent des données de mise à jour des macroblocs appartenant à chacune de ces grappes. Dans ce cas le module MRI établit la liste des macroblocs associée à une telle grappe en appliquant les données de mise à jour incluses dans cette grappe à une liste établie pour l'image précédente, et contenue dans une mémoire du module MRI.

Une fois les listes de macroblocs et blocs des grappes de l'image IE établies, si les données associées à ces grappes contiennent des données de priorité de décodage, indiquant une priorité de décodage d'une grappe par rapport à une autre ou par rapport aux macroblocs libres de l'image IE, alors le module MRI détermine un ordre de décodage des macroblocs et blocs en fonction de ces données de priorité.

Si en revanche l'image IE a été codée selon la variante de la **figure 5****,** le module MRI n'établit pas de listes de macroblocs pour chaque grappe. En effet le système de rattachement d'un macrobloc à une grappe par un champ ML contenu dans les données d'en-tête de ce macrobloc, permet au module MRI de prendre en compte ce rattachement lors de son parcours de l'image IE pour décoder successivement chaque macrobloc.

L'étape D2 est le décodage des macroblocs de l'image IE par le module MRI. Ce décodage s'effectue selon l'ordre de décodage déterminé à l'étape D1, si un tel ordre a été établi par le module MRI, sinon il est effectué dans l'ordre de parcours usuel des macroblocs de l'image IE.

Les macroblocs libres de l'image IE sont décodés de manière classique en utilisant la prédiction temporelle ou spatiale indiquée dans les champs MP d'en-tête de ces macroblocs.

Le décodage d'un macrobloc ou bloc appartenant à une grappe de l'image IE est effectué de la manière suivante :
- Pour un paramètre à décoder qui correspond à une valeur caractéristique de la grappe :
   - si les données du macrobloc ou bloc ne contiennent pas de valeur correspondant à ce paramètre à décoder, le module MRI attribue à ce paramètre la valeur caractéristique de la grappe,
   - si les données du macrobloc ou bloc contiennent une valeur correspondant à ce paramètre à décoder, le module MRI utilise cette valeur pour raffiner la valeur caractéristique de la grappe, par exemple ajoute cette valeur à la valeur caractéristique de la grappe, et attribue la valeur ainsi calculée au paramètre.
- Pour un paramètre à décoder qui ne correspond pas à une valeur caractéristique de la grappe, la valeur correspondante contenue dans les données du macrobloc ou bloc est décodée en utilisant la prédiction AVC indiquée pour ce bloc ou macrobloc.

Lorsqu'un macrobloc appartient à plusieurs grappes, le module MRI vérifie d'abord si une information de partitionnement est codée pour ce macrobloc, indiquant pour chacune de ces grappes quels blocs ou sous-blocs du macrobloc lui sont affectés. Si une telle information existe, les blocs et sous-blocs affectés à une seule grappe sont décodés comme décrit ci-dessus pour le décodage d'un macrobloc appartenant à une seule grappe.

Si une telle information n'est pas codée pour ce macrobloc, ou si certains blocs ou sous-blocs du macrobloc sont affectés à plusieurs grappes, le module MRI examine pour ceux-ci paramètre de codage du macrobloc par paramètre de codage du macrobloc quels sont les paramètres auxquels il est possible d'affecter par héritage une valeur caractéristique d'une de ces grappes, ou un raffinement de cette valeur caractéristique, comme décrit ci-dessus pour le décodage d'un macrobloc appartenant à une seule grappe. Lorsqu'il est possible d'affecter par héritage à un paramètre de codage plusieurs valeurs caractéristiques de grappes différentes, ou plusieurs raffinements de valeurs caractéristiques de grappes différentes, le module MRI affecte par exemple à ce paramètre une combinaison de ces valeurs caractéristiques, ou un raffinement de cette combinaison. En variante, si une donnée de priorité existe entre ces différentes grappes, le module MRI affecte par héritage à ce paramètre de codage la valeur caractéristique de la grappe prioritaire, ou un raffinement de cette valeur caractéristique.

Une fois tous les macroblocs de l'image IE décodés, le module MRI de reconstruction d'image fournit en sortie du décodeur DEC, une image ID correspondant au décodage de l'image IE.

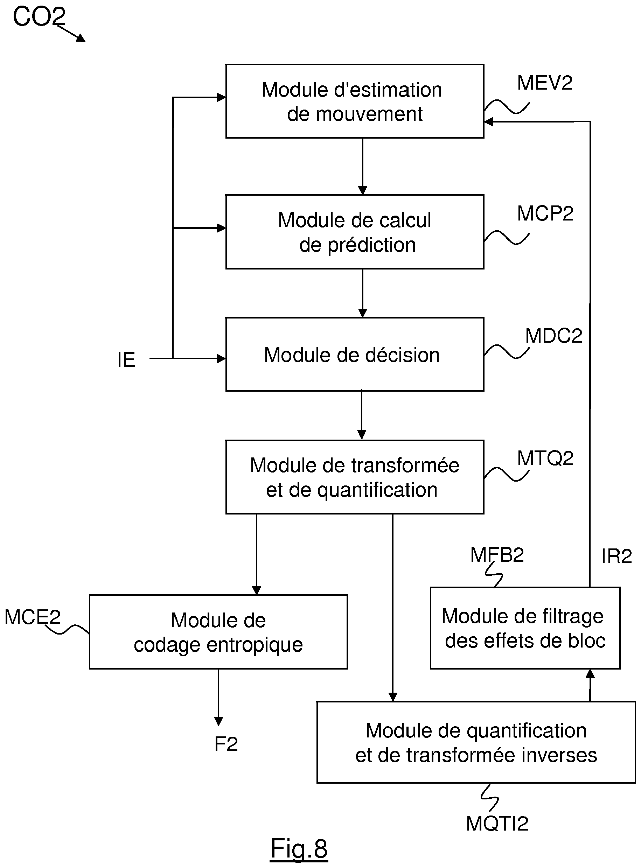

Selon un second mode de réalisation de l'invention, le procédé de codage selon l'invention est implémenté dans un dispositif de codage CO2, représenté à la **figure 8****.** Dans ce second mode de réalisation, les étapes du procédé de codage selon l'invention sont les mêmes que dans la **figure 1****,** mais sont implémentées différemment, le regroupement des macroblocs de l'image IE en grappes étant effectué pendant le codage des macroblocs "libres", c'est-à-dire non encore regroupés, de l'image IE.

Il est à noter que ce second mode de réalisation de l'invention est moins détaillé que le premier car il comporte beaucoup d'éléments communs avec le premier mode de réalisation.

Dans ce second mode de réalisation de l'invention, l'image IE à coder arrive directement en entrée d'un module MEV2 d'estimation de mouvement, d'un module MCP2 de calcul de prédiction et d'un module MDC2 de décision. Comme dans le premier mode de réalisation de l'invention, le module MCP2 de calcul de prédiction calcule différentes prédictions possibles des macroblocs de l'image IE. Ces prédictions sont calculées à partir de l'image IE ou d'images de référence IR2. Ces images de référence IR2 sont construites à partir d'autres images de la séquence, précédemment codées par le module MTQ2 de transformée et de quantification, décodées par le module MTQI2 de transformée et de quantification inverse, puis filtrées par le module MFB2 de filtrage d'effets de bloc. Ces modules MTQ2, MTQI2 et MFB2 fonctionnent respectivement comme les modules MTQ1, MTQI1 et MFB1 du dispositif CO1.

Les prédictions calculées par le module de calcul de prédiction MCP2 dépendent du type de l'image IE :
- Si l'image IE est une image de type intra, le module MCP2 de prédiction calcule les prédictions spatiales possibles de chaque macrobloc de l'image IE par rapport à d'autres macroblocs de l'image IE.
- Si l'image IE est une image de type inter, alors le module MEV2 calcule les mouvements entre l'image IE et une ou plusieurs images de référence IR2. Le module MCP2 de calcul de prédiction calcule ensuite les prédictions temporelles possibles de chaque macrobloc de l'image IE par rapport à des macroblocs d'autres images de la séquence à coder, et également les prédictions spatiales possibles de chaque macrobloc de l'image IE par rapport à d'autres macroblocs de l'image IE.

Une fois ces prédictions calculées, le module de décision MDC2 met alors en oeuvre le procédé de codage selon l'invention, en suivant les étapes C1 à C3 de la **figure 1****.**

L'étape C1 est le regroupement de macroblocs de l'image IE par grappes. Cette étape utilise les calculs de prédiction précédemment effectués sur les macroblocs de l'image IE par le module MCP2: Ces calculs permettent de déterminer un macrobloc représentatif de plusieurs autres macroblocs, qui sont alors regroupés en une grappe. La détermination de ce macrobloc représentatif utilise le critère débit-distorsion et ne se fait donc pas forcément sur un critère perceptuel, contrairement au premier mode de réalisation.

L'étape suivante C2 est la détermination des valeurs caractéristiques des grappes formées à l'étape C1. Pour une grappe donnée, ces valeurs caractéristiques correspondent aux valeurs de paramètre de codage du macrobloc représentatif de cette grappe.

L'étape suivante C3 est le codage des valeurs caractéristiques ainsi déterminées dans des structures de données, une structure de donnée étant associée à chaque grappe formée à l'étape C1, ainsi que le codage des macroblocs des grappes formées à l'étape C1. Une grappe est définie par les informations suivantes :
- les index des macroblocs regroupés dans cette grappe,
- l'index du macrobloc représentatif de cette grappe,
- pour chaque macrobloc de cette grappe pour lequel un ou plusieurs blocs ou sous-blocs ne sont pas affectés à cette grappe, une information de partitionnement définissant les blocs et sous-blocs du macrobloc affectés à cette grappe,
- si cette grappe est présente sur plusieurs images consécutives, éventuellement une donnée de durée de vie de la grappe, par exemple égale au nombre d'images suivantes encore concernées par cette grappe, ainsi que des données de mise à jour des index des macroblocs appartenant à cette grappe par rapport à l'image précédente, et éventuellement des informations de partitionnement associées aux macroblocs mis à jour, dans le cas où ceux-ci contiennent des blocs ou sous-blocs non affectés à cette grappe,
- si la grappe doit être décodée avant ou après d'autres grappes de macroblocs, ou avant ou après les macroblocs libres, une donnée de priorité de décodage.

Le codage des valeurs caractéristiques de la grappe s'effectue, dans ce second mode de réalisation, par référence au macrobloc représentatif de la grappe selon la **figure 9****.**

Par rapport aux variantes de codage des **figures 4** et **5****,** il n'y a pas de champ GD de données de grappe. En effet la structure de données codant les valeurs caractéristiques de la grappe est dans ce mode de réalisation, le macrobloc représentatif de la grappe. Toutes les autres données de grappe sont contenues dans les données de macrobloc.

Comme dans les variantes de codage des **figures 4** et **5****,** les macroblocs libres sont codés comme dans la norme H.264/MPEG-4 AVC, c'est-à-dire qu'ils comportent chacun un champ MT précisant le type inter ou intra du macrobloc considéré, un champ MP indiquant la direction de prédiction utilisée, et un champ MCR codant les valeurs de résidu du macrobloc, ou les valeurs non prédites du macrobloc si aucune prédiction temporelle ou spatiale n'est utilisée pour le macrobloc considéré.

En revanche les macroblocs codés en utilisant les valeurs caractéristiques d'une grappe, ainsi que le macrobloc représentatif de cette grappe, comportent chacun les champs suivants :
- le champ MT, qui code un nouveau type "MB_CLUSTER" de macrobloc, indiquant l'appartenance du macrobloc considéré à une grappe,
- un champ MZ, qui indique si le macrobloc considéré est le macrobloc représentatif de la grappe ou non, donne un indice de grappe, et éventuellement une durée de vie de la grappe et une priorité de décodage de la grappe,
- le champ MP, présent seulement si le macrobloc considéré est le macrobloc représentatif de la grappe, qui indique la prédiction utilisée pour coder ce macrobloc représentatif (type de prédiction et éventuellement direction de prédiction),
- et éventuellement le champ MCR codant le résidu de prédiction du macrobloc considéré.

Un macrobloc représentatif de grappe est donc codé selon une prédiction telle que définie dans la norme H.264/MPEG-4 AVC ; il s'agit par exemple, d'une prédiction spatiale ou temporelle. Son champ MCR code les valeurs prédites du macrobloc, ou les valeurs non prédites si aucune prédiction temporelle ou spatiale n'est utilisée pour le macrobloc considéré.

Les autres macroblocs appartenant à des grappes sont codés soit en utilisant les données de ces grappes, soit de la même façon qu'un macrobloc libre, en fonction du choix qui optimise le critère débit-distorsion.

Lorsque le module MDC2 utilise les données d'une grappe pour coder un macrobloc, il utilise, pour coder le champ MCR de ce macrobloc, les valeurs initiales, c'est-à-dire non prédites, du macrobloc représentatif de la grappe. Plus précisément, la valeur d'un paramètre contenu dans ce champ MCR est soit non codé, soit égal à la différence entre la valeur initiale correspondante du macrobloc représentatif de la grappe et la valeur initiale correspondante du macrobloc à coder. Lorsque cette valeur n'est pas codée, elle est codée en fait implicitement par héritage de la valeur initiale correspondante du macrobloc représentatif de la grappe.

Une fois ce codage structurel effectué par le module de décision MDC2, les coefficients correspondants aux blocs de l'image IE sont envoyés au module MTQ2 de transformée et de quantification, pour subir des transformées en cosinus discrètes puis une quantification. Les tranches de macroblocs avec ces coefficients quantifiés sont ensuite transmises au module MCE2 de codage entropique, pour produire, avec les autres images de la séquence vidéo déjà codées de la même façon que l'image IE, un flux vidéo F2, binaire, codé selon l'invention.

Le flux binaire F2 ainsi codé est transmis par un réseau de communication, à un terminal distant. Celui-ci comporte un décodeur selon l'invention. Ce décodeur a la même structure que le décodeur DEC du premier mode de réalisation, mais par rapport au décodeur DEC, son module de reconstruction d'image fonctionne différemment, puisqu'il effectue le décodage correspondant au codage inverse de celui effectué par le module MDC2. Ce décodage est effectué selon les deux étapes de décodage D1 et D2 selon l'invention, représentées à la **figure 7****.**

L'étape D1 est le décodage de structures de données de grappes codées dans les tranches de macroblocs de l'image IE. Cette étape est effectuée par le module de reconstruction image. Pour cela le module de reconstruction image parcourt les macroblocs contenus dans le flux F2 pour identifier les macroblocs représentatifs de grappes, chacun de ces macroblocs représentatifs identifiant une grappe. Il identifie également lors de ce parcours les macroblocs codés en utilisant les données de ces grappes, et décode les champs MZ associés aux macroblocs de grappes, afin de déterminer un ordre de décodage, tenant compte éventuellement des données de priorité si celles-ci sont incluses dans ces champs MZ.

Dans cette étape D1, le module de reconstruction image décode de plus chaque macrobloc représentatif de grappe précédemment identifié, en utilisant éventuellement des données de prédiction calculées lors du décodage d'images précédentes, si une prédiction temporelle ou spatiale est indiquée dans le champ MP du macrobloc représentatif.

Les valeurs contenues dans les champs MCR de ces macroblocs représentatifs servent en effet de référence pour décoder ensuite les autres macroblocs de type "MB_CLUSTER".

L'étape D2 est le décodage des autres macroblocs du flux F2, respectant l'ordre de décodage établi à l'étape D1, par le module de reconstruction image.

Les macroblocs du flux F2 ayant un champ MT indiquant un type de macrobloc "intra" ou "inter" sont décodés de manière classique en utilisant le type de prédiction indiqué dans les champs MP d'en-tête de ces macroblocs.

Le décodage d'un macrobloc d'une grappe mais non représentatif de cette grappe, ayant son champ MT égal à "MB_CLUSTER", est effectué de la manière suivante :
- si les données dans le champ MCR du macrobloc ne contiennent pas de valeur correspondant à ce paramètre à décoder, le module de reconstruction image attribue à ce paramètre la valeur correspondante et précédemment décodée du macrobloc représentatif de cette grappe,
- si les données dans le champ MCR du macrobloc contiennent une valeur correspondant à ce paramètre à décoder, le module de reconstruction image utilise cette valeur pour calculer un raffinement de la valeur correspondante et précédemment décodée du macrobloc représentatif de cette grappe, et attribue la valeur ainsi calculée au paramètre.

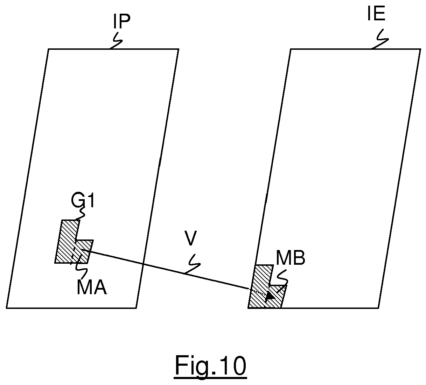

Selon un troisième mode de réalisation de l'invention, le procédé de codage selon l'invention est implémenté dans un dispositif de codage similaire au dispositif CO1 de la **figure 2****,** mais dans lequel le module de regroupement par grappe détecte un mouvement homogène de macroblocs de l'image IE, par exemple ceux de la grappe G1, par rapport à une image précédente. Ce mouvement homogène est modélisé par le module de regroupement par grappe par un vecteur V, représenté à la **figure 10****.** En variante, ce mouvement homogène de macroblocs de l'image IE est codé autrement que par un seul vecteur, par exemple de manière paramétrique.

Dans ce troisième mode de réalisation, on mutualise, grâce aux données de la grappe G1, des données de mouvement et non des données de texture. De plus dans ce troisième mode de réalisation, le procédé de codage selon l'invention suit les mêmes étapes que dans la **figure 1****,** et est donc moins détaillé que pour le premier mode de réalisation, car ces étapes comportent beaucoup d'éléments communs avec le premier mode de réalisation.

Dans la première étape C1, le module de regroupement par grappe regroupe par grappes les ensembles de macroblocs ayant un mouvement homogène, ici les macroblocs de la grappe C1. Ce regroupement s'effectue par estimation de mouvement, en utilisant des techniques similaires à celles utilisées par le module MEV1 d'estimation de mouvement.

L'étape suivante C2 est la détermination d'une ou plusieurs valeurs de mouvement caractérisant la grappe G1. Ici le module de regroupement par grappe effectue une moyenne des vecteurs de mouvement associés aux mouvement des macroblocs de la grappe G1 de l'image IP à l'image IE, résultant en un vecteur V caractéristique de mouvement.

A la fin de l'étape C2, le module de regroupement par grappes transmet l'image IE ainsi que les informations définissant la grappe G1 aux modules de calcul de prédiction et de décision du codeur utilisé dans ce troisième mode de réalisation. Les informations définissant la grappe G1 sont les suivantes :
- les index des macroblocs regroupés dans cette grappe,
- les valeurs du vecteur V caractéristique de mouvement, correspondant à deux paramètres de type AVC pour le codage d'un vecteur de mouvement.

En variante, comme dans les premier et second modes de réalisation, on attribue une durée de vie à la grappe G1, une donnée de priorité de décodage ou des informations de partitionnement si certains blocs d'un macrobloc de la grappe G1 ne sont pas affectés à la grappe G1. Dans cette variante, une prédiction temporelle est donc envisageable pour le codage du vecteur caractéristique de mouvement de la grappe G1.

L'étape suivante C3 est le codage du vecteur V caractéristique de la grappe G1 dans une structure de données associée à la grappe G1, et le codage des macroblocs de l'image IE. Ce codage est effectué par le module de décision de manière similaire au codage d'un vecteur de mouvement quelconque d'un macrobloc au format H.264/MPEG-4 AVC.

Le codage des données de la grappe G1 et des macroblocs de l'image IE est effectué de manière similaire à l'une des variantes de la **figure 4** ou de la **figure 5****.**

Notamment dans la variante de la **figure 4****,** la structure de données associée à la grappe G1 comprend des données G1D et des pointeurs P11, P12 et P13 qui pointent chacun sur un macrobloc de la grappe G1. Les données G1D comprennent un champ GM contenant le codage du vecteur V caractéristique du mouvement de la grappe. Dans la variante de la **figure 5****,** les données G1D comportent en plus un champ GI d'indice de grappe, et les structures de données associées à chacune des grappes ne contiennent pas de pointeurs sur les macroblocs appartenant à ces grappes, l'indication de l'appartenance d'un macrobloc à une grappe se faisant autrement, par l'utilisation d'un champ ML codé dans chaque macrobloc.

Suivant un critère débit-distorsion, le module de décision code les macroblocs libres de l'image IE en utilisant la prédiction AVC la plus pertinente, et les macroblocs de la grappe G1 soit comme des macroblocs libres, soit en utilisant les données associées à la grappe G1.

Dans ce dernier cas, lorsque la variante de codage de la **figure 4** est utilisée, un macrobloc de la grappe G1 comporte un seul champ, le champ MCR, qui apparaît dans le cas où un résidu est codé pour raffiner le vecteur V de mouvement caractéristique de la grappe, ou dans le cas où un résidu est codé pour raffiner la texture du macrobloc par rapport à sa texture obtenue par compensation de mouvement à l'aide du vecteur caractéristique V éventuellement raffiné.

Si en revanche on utilise la variante de la **figure 5****,** ce macrobloc comporte les champs suivants :
- un champ MT correspondant à un nouveau type de macrobloc, par exemple "MB_CLUSTER", indiquant son appartenance à une grappe,
- un nouveau champ d'en-tête ML, qui indique la grappe à laquelle appartient le macrobloc,
- et un champ MCR, qui apparaît dans le cas où un résidu est codé pour raffiner le vecteur V de mouvement caractéristique de la grappe, ou dans le cas où un résidu est codé pour raffiner la texture du macrobloc par rapport à la texture obtenue par compensation de mouvement à l'aide du vecteur caractéristique V éventuellement raffiné.

Il est à noter que lorsqu'un macrobloc a le type "MB_CLUSTER", il n'a pas de champ MP puisque dans ce mode de réalisation on n'utilise pas de prédiction temporelle pour le codage des données de grappe.

Dans chacune de ces variantes, le codage du champ MCR d'un macrobloc utilisant les données de la grappe G1 est le suivant :
- la valeur du vecteur de mouvement calculée préalablement pour ce macrobloc par le module d'estimation de mouvement du codeur, n'est pas codée, ou seule la différence entre cette valeur et la valeur du vecteur V caractéristique de mouvement de la grappe est codée,
- les valeurs des autres paramètres de codage du macrobloc, par exemple caractérisant sa texture, ne sont pas codées ou seules les différences entre les valeurs correspondantes obtenues par compensation de mouvement en utilisant le vecteur de mouvement du macrobloc préalablement calculé par le module d'estimation de mouvement, sont codées.

Par exemple sur la **figure 10****,** si l'on considère que le macrobloc MB correspond à peu près au macrobloc MA de l'image précédente IP, et que le vecteur de mouvement entre le macrobloc MB et le macrobloc MA correspond au vecteur V caractéristique de mouvement de la grappe, alors le champ MCR du macrobloc MB :
- ne contient pas de valeur correspondant au paramètre de vecteur de mouvement, cette valeur étant codée implicitement comme égale à la valeur du vecteur V caractéristique de mouvement de la grappe,
- et contient des valeurs de résidus de texture, correspondant aux différences de texture entre le macrobloc MB et le macrobloc MA.

Une fois ce codage structurel effectué par le module de décision, les coefficients de résidus s'ils existent, correspondants aux blocs de l'image IE, subissent des transformées en cosinus discrètes puis une quantification. Les tranches de macroblocs avec ces coefficients quantifiés sont ensuite soumis à un codage entropique, pour produire un flux vidéo binaire codé selon l'invention.

Le décodage de ce flux vidéo binaire est ensuite effectué par un décodeur selon l'invention, effectuant des opérations inverses de celles effectuée par le codeur selon l'invention, de manière similaire aux procédés de décodage précédemment décrits dans les autres modes de réalisation de l'invention.

Il est à noter que d'autres modes de réalisation et d'autres variantes de codage et de décodage sont envisageables pour implémenter le procédé de codage et le procédé de décodage selon l'invention. En outre diverses syntaxes de codage sont possibles. Par exemple en variante on mutualise les données de grappes ayant des valeurs caractéristiques similaires, dans une structure de données associée à ces grappes, et qui est utilisée pour le décodage des structures de données associées individuellement à chacune de ces grappes.

## Revendications

1. Procédé de codage d'une image ou d'une séquence d'images générant un flux (F1) de données comportant des données représentatives de groupes de pixels dans une desdites images (IE), dits blocs, chacun desdits blocs étant associé à au moins un paramètre de bloc, comportant les étapes de :
- regroupement (C1) d'une pluralité de blocs dans une grappe (G1) de blocs en cas de proximité entre chacune des valeurs dudit au moins un paramètre relativement aux blocs de ladite pluralité,
- détermination (C2) d'une valeur caractéristique de ladite grappe (G1) de blocs, en fonction de la valeur dudit au moins un paramètre de bloc,
**caractérisé en ce qu'**il comporte l'étape de :
- codage (C3) des blocs de ladite grappe (G1), dans lequel la valeur dudit au moins un paramètre relativement à chaque bloc de ladite grappe n'est pas codée ou bien la valeur dudit au moins un paramètre relativement à chaque bloc de ladite grappe est codée par calcul d'une valeur de raffinement étant égale à la différence entre la valeur dudit au moins un paramètre relativement à chaque bloc de ladite grappe et ladite valeur caractéristique, et codage d'une structure de données associée à ladite grappe (G1) de blocs, ladite structure de données comportant une donnée associée à ladite valeur caractéristique.

2. Procédé de codage selon la revendication 1, dans lequel ladite valeur caractéristique correspond à la valeur dudit au moins un paramètre d'un bloc de ladite grappe (G1).

3. Procédé de codage selon la revendication 1 ou 2, dans lequel dans l'étape (C1) de regroupement de blocs, au moins un sous-bloc d'un des blocs ainsi regroupés n'est pas affecté à ladite grappe (G1) de blocs, une information de partitionnement dudit bloc déterminant les sous-blocs dudit bloc affectés à ladite grappe (G1) étant codée dans ladite structure de données, ou dans ledit bloc lors de ladite étape de codage (C3) de blocs de ladite grappe (G1).

4. Procédé de codage selon l'une quelconque des revendications 1 à 3, dans lequel ladite grappe (G1) de blocs est associée à une donnée de priorité de décodage des blocs de ladite grappe (G1) par rapport à d'autres blocs ou grappes de blocs de ladite image.

5. Procédé de codage d'une séquence d'images selon l'une quelconque des revendications 1 à 4, dans lequel ladite grappe (G1) de blocs est associée à une donnée de durée de vie correspondant à un nombre d'images successives de ladite séquence d'images, ladite structure de données associée à ladite grappe (G1) étant codée une seule fois pour lesdites images successives.

6. Procédé de décodage d'un flux (F1) de données représentatif d'une image ou d'une séquence d'images, ledit flux (F1) comportant des données représentatives de groupes de pixels dans une desdites images (IE), dits blocs, chacun desdits blocs étant associé à au moins un paramètre de codage de bloc, **caractérisé en ce qu'**il comporte les étapes de :
- décodage (D1) d'une structure de données associée à un ensemble desdits blocs, dit grappe (G1) de blocs, dans laquelle lesdits blocs ont été regroupés en raison de la proximité de la valeur dudit au moins un paramètre relativement à chacun desdits blocs, et décodage d'au moins une valeur caractéristique de ladite grappe, ladite valeur caractéristique étant fonction de la valeur dudit au moins un paramètre de codage de bloc,
- et décodage (D2) de chacun des blocs de ladite grappe (G1), attribuant audit au moins un paramètre de codage d'un bloc considéré dans ladite grappe, si la valeur dudit au moins un paramètre n'est pas codée pour ledit bloc, ladite valeur caractéristique, ou bien, si la valeur dudit au moins un paramètre est codée pour ledit bloc, ladite valeur caractéristique à laquelle est additionnée une valeur de raffinement qui est égale à la différence entre la valeur dudit au moins un paramètre relativement audit bloc considéré et ladite valeur caractéristique.

7. Procédé de décodage selon la revendication 6, dans lequel ladite étape (D2) de décodage d'un bloc est précédée d'une étape de décodage d'une information de partitionnement dudit bloc, déterminant les sous-blocs dudit bloc affectés à ladite grappe (G1) de blocs, et dans lequel dans ladite étape (D2) de décodage dudit bloc, les sous-blocs dudit bloc non affectés à ladite grappe (G1) sont décodés sans utiliser ladite valeur caractéristique.

8. Dispositif de codage (CO1) d'une image ou d'une séquence d'images générant un flux (F1) de données comportant des données représentatives de groupes de pixels dans une desdites images (IE), dits blocs, chacun desdits blocs étant associé à au moins un paramètre de bloc, ledit dispositif comportant :
- des moyens (MRG1) de regroupement d'une pluralité de blocs dans une grappe (G1) de blocs en cas de proximité entre chacune des valeurs dudit au moins un paramètre relativement aux blocs de ladite pluralité,
- des moyens (MRG1) de détermination d'une valeur caractéristique de ladite grappe (G1) de blocs, en fonction de la valeur dudit au moins un paramètre de bloc,
**caractérisé en ce qu'**il comporte :
- des moyens (MDC1) de codage d'une structure de données associée à ladite grappe (G1) de blocs, ladite structure de données comportant une donnée associée à ladite valeur caractéristique,
- et des moyens (MDC1) de codage des blocs de ladite grappe (G1), dans lesquels la valeur dudit au moins un paramètre relativement à chaque bloc de ladite grappe n'est pas codée ou bien la valeur dudit au moins un paramètre relativement à chaque bloc de ladite grappe est codée par calcul d'une valeur de raffinement étant égale à la différence entre la valeur dudit au moins un paramètre relativement à chaque bloc de ladite grappe et ladite valeur caractéristique.

9. Dispositif (DEC) de décodage d'un flux (F1) de données représentatif d'une image ou d'une séquence d'images, ledit flux (F1) comportant des données représentatives de groupes de pixels dans une desdites images (IE), dits blocs, chacun desdits blocs étant associé à au moins un paramètre de codage de bloc, **caractérisé en ce qu'**il comporte :
- des moyens de décodage (MRI) d'une structure de données associée à un ensemble desdits blocs, dit grappe (G1) de blocs, dans laquelle lesdits blocs ont été regroupés en raison de la proximité de la valeur dudit au moins un paramètre relativement à chacun desdits blocs, et d'au moins une valeur caractéristique de ladite grappe (G1) de blocs, ladite valeur caractéristique étant fonction de la valeur dudit au moins un paramètre de codage de bloc,
- et des moyens de décodage (MRI) de chacun des blocs de ladite grappe (G1), attribuant audit au moins un paramètre de codage d'un bloc considéré dans ladite grappe, si la valeur dudit au moins un paramètre n'est pas codée pour ledit bloc, ladite valeur caractéristique, ou bien, si la valeur dudit au moins un paramètre est codée pour ledit bloc, ladite valeur caractéristique à laquelle est additionnée une valeur de raffinement qui est égale à la différence entre la valeur dudit au moins un paramètre relativement audit bloc considéré et ladite valeur caractéristique.

10. Programme d'ordinateur comportant des instructions pour mettre en oeuvre l'un des procédés selon l'une quelconque des revendications 1 à 7, lorsqu'il est exécuté sur un ordinateur.

## Patentansprüche

1. Verfahren zum Codieren eines Bildes oder einer Folge von Bildern, das oder die einen Datenstrom (F1) erzeugt oder erzeugen, der Daten aufweist, die für Gruppen von Pixeln in einem der Bilder (IE), die Blöcke genannt werden, repräsentativ sind, wobei jeder der Blöcke mindestens einem Blockparameter zugeordnet wird, umfassend die Schritte des:
- Gruppierens (C1) einer Mehrzahl von Blöcken in einem Cluster (G1) von Blöcken im Falle der Nähe zwischen jedem der Werte des mindestens einen Parameters in Bezug auf die Blöcke der Mehrzahl,
- Bestimmens (C2) eines charakteristischen Wertes des Clusters (G1) von Blöcken in Abhängigkeit von dem Wert des mindestens einen Blockparameters,
**dadurch gekennzeichnet, dass** es den Schritt aufweist:
- des Codierens (C3) der Blöcke des Clusters (G1), wobei der Wert des mindestens einen Parameters in Bezug auf jeden Block des Clusters nicht codiert wird oder der Wert des mindestens einen Parameters in Bezug auf jeden Block des Clusters durch Berechnen eines Verfeinerungswerts codiert wird, der gleich der Differenz zwischen dem Wert des mindestens einen Parameters in Bezug auf jeden Block des Clusters und dem charakteristischen Wert ist, und des Codierens einer Datenstruktur, die dem Cluster (G1) der Blöcke zugeordnet wird, wobei die Datenstruktur mindestens ein Datum aufweist, das dem charakteristischen Wert zugeordnet wird.

2. Verfahren zum Codieren nach Anspruch 1, wobei der charakteristische Wert dem Wert des mindestens einen Parameters eines Blocks des Clusters (G1) entspricht.

3. Verfahren zum Codieren nach Anspruch 1 oder 2, wobei in dem Schritt (C1) des Gruppierens von Blöcken mindestens ein Unterblock von einem der auf diese Weise gruppierten Blöcke nicht dem Cluster (G1) von Blöcken zugewiesen wird, wobei eine Partitionierungsinformation des Blocks, die die Unterblöcke des Blocks bestimmt, die dem Cluster (G1) zugewiesen werden, in der Datentstruktur oder in dem Block bei dem Schritt des Codierens (C3) von Blöcken des Clusters (G1) codiert wird.

4. Verfahren zum Codieren nach einem der Ansprüche 1 bis 3, wobei der Cluster (G1) von Blöcken einem Prioritätsdatum des Decodierens der Blöcke des Clusters (G1) gegenüber anderen Blöcken oder Clustern von Blöcken des Bildes zugeordnet wird.

5. Verfahren zum Codieren einer Folge von Bildern nach einem der Ansprüche 1 bis 4, wobei der Cluster (G1) von Blöcken einem Datum der Lebensdauer zugeordnet wird, das einer Anzahl von aufeinanderfolgenden Bildern der Folge von Bildern entspricht, wobei die Datenstruktur, die dem Cluster (G1) zugeordnet wird, ein einziges Mal für die aufeinanderfolgenden Bilder codiert wird.

6. Verfahren zum Decodieren eines Datenstroms (F1), der für ein Bild oder eine Folge von Bilder repräsentativ ist, wobei der Strom (F1) Daten aufweist, die für Gruppen von Pixeln in einem der Bilder (IE), die Blöcke genannt werden, repräsentativ sind, wobei jeder der Blöcke mindestens einem Blockcodierungsparameter zugeordnet wird, **dadurch gekennzeichnet, dass** es die Schritte aufweist:
- des Decodierens (D1) einer Datenstruktur, die einer Anordnung der Blöcke zugeordnet wird, die Cluster (G1) von Blöcken genannt wird, wobei die Blöcke aufgrund der Nähe des Wertes des mindestens einen Parameters in Bezug auf jeden der Blöcke gruppiert worden sind, und des Decodierens von mindestens einem charakteristischen Wert des Clusters, wobei der charakteristische Wert von dem Wert des mindestens einen Blockcodierungsparameter abhängig ist,
- und des Decodierens (D2) von jedem der Blöcke des Clusters (G1), wobei dem mindestens einen Codierungsparameter eines betreffenden Blocks in dem Cluster, wenn der Wert des mindestens einen Parameters für den Block nicht codiert wird, der charakteristische Wert oder, wenn der Wert des mindestens einen Parameters für den Block codiert wird, der charakteristische Wert zudem ein Verfeinerungswert addiert wird, zugeordnet wird, wobei der Verfeinerungswert gleich der Differenz zwischen dem Wert des mindestens einen Parameters in Bezug auf den betreffenden Block und dem charakteristischen Wert ist.

7. Verfahren zum Decodieren nach Anspruch 6, wobei dem Schritt des Decodierens (D2) eines Blocks ein Schritt des Decodierens einer Partitionierungsinformation des Blocks vorausgeht, der die Unterblöcke des Blocks bestimmt, die dem Cluster (G1) von Blöcken zugewiesen werden, und wobei in dem Schritt (D2) des Decodierens des Blocks die Unterblöcke des Blocks, die dem Cluster (G1) nicht zugewiesen werden, decodiert werden, ohne den charakteristischen Wert zu verwenden.

8. Vorrichtung zum Codieren (CO1) eines Bildes oder einer Folge von Bildern, das oder die einen Datenstrom (F1) erzeugt oder erzeugen, der Daten aufweist, die für Gruppen von Pixeln in einem der Bilder (IE), die Blöcke genannt werden, repräsentativ sind, wobei jeder der Blöcke mindestens einem Blockparameter zugeordnet ist, wobei die Vorrichtung aufweist:
- Mittel (MRG1) zum Gruppierens einer Mehrzahl von Blöcken in einem Cluster (G1) von Blöcken im Falle der Nähe zwischen jedem der Werte des mindestens einen Parameters in Bezug auf die Blöcke der Mehrzahl,
- Mittel (MRG1) zum Bestimmen eines charakteristischen Wertes des Clusters (G1) von Blöcken in Abhängigkeit von dem Wert des mindestens einen Blockparameters,
**dadurch gekennzeichnet ist, dass** es aufweist:
- Mittel (MDC1) zum Codieren einer Struktur von Daten, die dem Cluster (G1) von Blöcken zugeordnet ist, wobei die Struktur von Daten ein Datum aufweist, das dem charakteristischen Wert zugeordnet ist,
- und Mittel (MDC1) zum Codieren der Blöcke des Clusters (G1), wobei der Wert des mindestens einen Parameters in Bezug auf jeden Block des Clusters nicht codiert ist oder der Wert des mindestens einen Parameters in Bezug auf jeden Block des Clusters durch Berechnen eines Verfeinerungswerts codiert ist, der gleich der Differenz zwischen dem Wert des mindestens einen Parameters in Bezug auf jeden Block des Clusters und dem charakteristischen Wert ist.

9. Vorrichtung (DEC) zum Decodieren eines Datenstroms (F1), der für ein Bild oder eine Folge von Bilder repräsentativ ist, wobei der Strom (F1) Daten aufweist, die für Gruppen von Pixeln in einem der Bilder (IE), die Blöcke genannt werden, repräsentativ sind, wobei jeder der Blöcke mindestens einem Blockcodierungsparameter zugeordnet ist, **dadurch gekennzeichnet, dass** sie aufweist:
- Mittel zum Decodieren (MRI) einer Datenstruktur, die einer Anordnung der Blöcke zugeordnet ist, die Cluster (G1) von Blöcken genannt wird, wobei die Blöcke aufgrund der Nähe des Wertes des mindestens einen Parameters in Bezug auf jeden der Blöcke gruppiert worden sind, und mindestens eines charakteristischen Wertes des Clusters (G1) von Blöcken, wobei der charakteristische Wert von dem Wert des mindestens einen Blockcodierungsparameters abhängig ist,
- und Mittel zum Decodieren (MRI) von jedem der Blöcke des Clusters (G1), wobei dem mindestens einen Codierungsparameter eines betreffenden Blocks in dem Cluster, wenn der Wert des mindestens einen Parameters für den Block nicht codiert ist, der charakteristische Wert oder, wenn der Wert des mindestens einen Parameters für den Block codiert ist, der charakteristische Wert zudem ein Verfeinerungswert addiert wird, zugeordnet wird, wobei der Verfeinerungswert gleich der Differenz zwischen dem Wert des mindestens einen Parameters in Bezug auf den betreffenden Block und dem charakteristischen Wert ist.

10. Computerprogramm, das Anweisungen zum Umsetzen von einem der Verfahren nach einem der Ansprüche 1 bis 7 aufweist, wenn es auf einem Computer ausgeführt wird.

## Claims

1. Method for coding an image or a sequence of images generating a stream (F1) of data comprising data representative of groups of pixels in one of said images (IE), called blocks, each of said blocks being associated with at least one block parameter, comprising the steps of:
- grouping (C1) of a plurality of blocks in a cluster (G1) of blocks in case of proximity between each of the values of said at least one parameter relating to the blocks of said plurality,
- determination (C2) of a value characteristic of said cluster (G1) of blocks, as a function of the value of said at least one block parameter,
**characterized in that** it comprises the step of:
- coding (C3) of the blocks of said cluster (G1), in which the value of said at least one parameter relating to each block of said cluster is not coded or else the value of said at least one parameter relating to each block of said cluster is coded by computation of a refinement value that is equal to the difference between the value of said at least one parameter relating to each block of said cluster and said characteristic value, and coding of a data structure associated with said cluster (G1) of blocks, said data structure comprising a datum associated with said characteristic value.

2. Coding method according to Claim 1, in which said characteristic value corresponds to the value of said at least one parameter of a block of said cluster (G1).

3. Coding method according to Claim 1 or 2, wherein, in the step (C1) of grouping of blocks, at least one sub-block of one of the blocks thus grouped is not assigned to said cluster (G1) of blocks, information on partitioning of said block determining the sub-blocks of said block assigned to said cluster (G1) being coded in said data structure, or in said block during said step of coding (C3) of blocks of said cluster (G1).

4. Coding method according to any one of Claims 1 to 3, wherein said cluster (G1) of blocks is associated with a datum of priority of decoding of the blocks of said cluster (G1) relative to other blocks or clusters of blocks of said image.

5. Method for coding a sequence of images according to any one of Claims 1 to 4, wherein said cluster (G1) of blocks is associated with a life span datum corresponding to a number of successive images of said sequence of images, said data structure associated with said cluster (G1) being coded once for said successive images.

6. Method for decoding a stream (F1) of data representative of an image or of a sequence of images, said stream (F1) comprising data representative of groups of pixels in one of said images (IE), called blocks, each of said blocks being associated with at least one block coding parameter, **characterized in that** it comprises the steps of:
- decoding (D1) of a data structure associated with a set of said blocks, called cluster (G1) of blocks, wherein said blocks have been grouped together because of the proximity of the value of said at least one parameter relating to each of said blocks, and decoding of at least one value characteristic of said cluster, said characteristic value being a function of the value of said at least one block coding parameter,
- and decoding (D2) of each of the blocks of said cluster (G1), attributing to said at least one coding parameter of a block considered in said cluster, if the value of said at least one parameter is not coded for said block, said characteristic value, or else, if the value of said at least one parameter is coded for said block, said characteristic value to which is added a refinement value which is equal to the difference between the value of said at least one parameter relating to said block considered and said characteristic value.

7. Decoding method according to Claim 6, wherein said step (D2) of decoding of a block is preceded by a step of decoding of information on partitioning of said block, determining the sub-blocks of said block assigned to said cluster (G1) of blocks, and wherein, in said step (D2) of decoding of said block, the sub-blocks of said block which are not assigned to said cluster (G1) are decoded without using said characteristic value.

8. Device (CO1) for coding an image or a sequence of images generating a stream (F1) of data comprising data representative of groups of pixels in one of said images (IE), called blocks, each of said blocks being associated with at least one block parameter, said device comprising:
- means (MRG1) for grouping together a plurality of blocks in a cluster (G1) of blocks in case of proximity between each of the values of said at least one parameter relating to the blocks of said plurality,
- means (MRG1) for determining a value characteristic of said cluster (G1) of blocks, as a function of the value of said at least one block parameter,
**characterized in that** it comprises:
- means (MDC1) for coding a data structure associated with said cluster (G1) of blocks, said data structure comprising a datum associated with said characteristic value,
- and means (MDC1) for coding blocks of said cluster (G1), in which the value of said at least one parameter relating to each block of said cluster is not coded or else the value of said at least one parameter relating to each block of said cluster is coded by computation of a refinement value that is equal to the difference between the value of said at least one parameter relating to each block of said cluster and said characteristic value.

9. Device (DEC) for decoding a stream (F1) of data representative of an image or of a sequence of images, said stream (F1) comprising data representative of groups of pixels in one of said images (IE), called blocks, each of said blocks being associated with at least one block coding parameter, **characterized in that** it comprises:
- means (MRI) for decoding a data structure associated with a set of said blocks, called cluster (G1) of blocks, wherein said blocks have been grouped together because of the proximity of the value of said at least one parameter relating to each of said blocks, and of at least one value characteristic of said cluster (G1) of blocks, said characteristic value being a function of the value of said at least one block coding parameter,
- and means (MRI) for decoding each of said blocks of said cluster (G1), attributing to said at least one coding parameter of a block considered in said cluster, if the value of said at least one parameter is not coded for said block, said characteristic value, or else, if the value of said at least one parameter is coded for said block, said characteristic value to which is added a refinement value which is equal to the difference between the value of said at least one parameter relating to said block considered and said characteristic value.

10. Computer program comprising instructions for implementing one of the methods according to any one of Claims 1 to 7, when it is run on a computer.
